# EUROPÄISCHE PATENTANMELDUNG

(11) **EP 2 607 136 A1**
(43) Veröffentlichungstag der Anmeldung: **26.06.2013**
(21) Anmeldenummer: 12194323.7
(22) Anmeldetag: 27.11.2012
(51) Int. Cl.: B60K 15/04

(54) **Einrichtung zum dichten Verschließen eines Behälters**

(30) Priorität: 19.12.2011 DE 202011109540 U; 02.03.2012 DE 202012002219 U
(71) Anmelder: Reutter GmbH, 71397 Leutenbach (DE)
(72) Erfinder: Horlacher, Frank, 71332 Waiblingen (DE); Rauleder, Robert, 71404 Korb (DE)
(74) Vertreter: Dreiss

(57) **Zusammenfassung**

Die Erfindung betrifft eine Einrichtung zum dichten Verschließen eines Behälters, insbesondere eines solchen für Kraftstoff für beispielsweise Kraftfahrzeuge, mit einem Verschlussdeckel, der eine Griffkappe, ein mit der Griffkappe drehfest verbundenes oder verbindbares Dreh-Hub-Verschlussteil, vorzugsweise Bajonett-Verschlussteil, sowie ein erstes Dichtteil aufweist, das gegenüber dem Dreh-Hub-Verschlussteil relativ verdrehbar ist, wobei ein Füllstutzensockel, auf den der Verschlussdeckel durch eine Drehhubbewegung dicht verschließend aufsetzbar ist und der entweder unmittelbar mit dem Behälter oder mit einem Füllstutzenteil des Behälters verbindbar bzw. verbunden ist, wobei der Füllstutzensockel ein Dreh-Hub-Gegenverschlussteil sowie ein zweites (Gegen-) Dichtteil, das mit dem ersten Dichtteil axial gegeneinander gedrückt verbindbar ist, aufweist.

## Beschreibung

Die vorliegende Erfindung bezieht sich auf eine Einrichtung zum dichten Verschließen eines Behälters, insbesondere eines solchen für Kraftstoff für beispielsweise Kraftfahrzeuge, nach dem Oberbegriff des Anspruchs 1.

Bei einer derartigen aus der EP 1 682 374 B1 bekannten Einrichtung ist der Verschlussdeckel mit einer Vielzahl von zusammenzusetzenden Elementen versehen, die es ermöglichen, dass der gegenüber der Griffkappe verdrehbar gehaltene Dichtring axial auf eine ebene Dichtfläche des Füllstutzens aufgesetzt werden kann, ohne dass sich der Dichtring bei der Hubbewegung in Umfangsrichtung bewegt. Hierzu sind neben der Griffkappe das Dichtteil, der Dichtring, ein Spannteil mit Ringdichtung und eine federbelastete Hohlachse im Verschlussdeckel vorgesehen. Dies ist eine relativ große Anzahl an Bauelementen, die zum Verschlussdeckel montiert werden müssen und bei der es außerdem einer Anpassung der ebenen Dichtfläche des mit dem Behälter geformten Füllstutzens bedarf. Die Dichtfläche des Füllstutzens liegt bei jedem Tankvorgang relativ frei, so dass die Gefahr von Beschädigungen der Dichtfläche gegeben ist. Im Vorgriff ist es deshalb notwendig, relativ große axiale Federkräfte für eine langlebige Dichtwirkung vorzusehen.

Aufgabe der vorliegenden Erfindung ist es deshalb, eine Einrichtung zum dichten Verschließen eines Behälters, insbesondere eines solchen für Kraftstoff für beispielsweise Kraftfahrzeuge, der eingangs genannten Art zu schaffen, die mit weniger Bauteilen auskommt und dabei ein preisgünstigeres und raumsparenderes Verschlusssystem bietet.

Zur Lösung dieser Aufgabe sind bei einer Einrichtung zum dichten Verschließen eines Behälters, insbesondere eines solchen für Kraftstoff für beispielsweise Kraftfahrzeuge, der eingangs genannten Art die im Anspruch 1 angegebenen Merkmale vorgesehen.

Durch die erfindungsgemäßen Maßnahmen ist erreicht, dass das dichtende Verschließen des Füllstutzens eines Behälters mittels des Verschlussdeckels in der Weise, dass die Dichtteile, ohne sich gegeneinander zu verdrehen, axial aufeinandergedrückt werden, erhalten bleibt, obwohl der Verschlussdeckel mit weniger Bauteilen auskommt. Eine weitere Vereinfachung ergibt sich dadurch, dass ein zum Verschlussdeckel passender Füllstutzensockel vorgesehen ist, der in Kombination mit dem Verschlussdeckel die Einrichtung zum dichten Verschließen eines Behälters bildet, da der Füllstutzensockel mit dem Behälter unmittelbar oder mit einem am Behälter vorgesehenen Füllstutzenteil entweder in der Weise verbunden wird, dass der Füllstutzensockel dem Verschlussdeckel abgewandt in den Kunststoffbehälter eingeformt wird, oder dadurch, dass der Füllsutzensockel stumpf auf das Füllstutzenteil beispielsweise geschweißt wird. Dabei können durchaus unterschiedliche Materialien für Behälter und Füllstutzensockel, also beispielsweise Stahl, Aluminium oder Kunststoff, verwendet werden. Vorteilhaft dabei ist, dass die gesamte Einrichtung aus einer Hand hergestellt werden kann und damit hinsichtlich der Qualitätsvorgaben einheitlich ist.

Bei einer bevorzugten Ausführungsform gemäß Anspruch 2 besitzt der Füllstutzensockel einen separaten Verbindungssockel zum Behälter, so dass es dem Behälterhersteller lediglich obliegt, den Verbindungssockel am Behälter anzubringen.

Eine bevorzugte Ausführungsform hinsichtlich der beiden Dichtteile und deren Verbindung ergibt sich aus den Merkmalen nach Anspruch 3. Dabei wird die Dichtverbindung durch axialen Federdruck unterstützt.

Mit den Merkmalen nach Anspruch 4 ist erreicht, dass der Dichtungsring am Füllstutzensockel in materialsparender Ausführung verliersicher gehalten ist. Außerdem ist der Dichtungsring relativ versteckt gehalten, so dass eine Beschädigung durch ein Zapfventil so gut wie ausgeschlossen ist.

Eine weitere Schutzwirkung des Dichtungsrings am Füllstutzensockel ergibt sich durch die Merkmale nach Anspruch 5.

Eine vorteilhafte Dreh-Hub-Verbindung ergibt sich dann, wenn die Merkmale nach Anspruch 6 vorgesehen sind, so dass der Verschlussdeckel selbst in seine Position beim Auffinden auf den Füllstutzensockel findet und durch eine Drehung von maximal 45° mit seinen Noppen in die entsprechenden Kulissen eingreifend verriegelt.

Eine vorteilhafte Ausgestaltung der Einrichtung ergibt sich aus den Merkmalen des Anspruchs 7, wonach in besonders einfacher Weise eine einfach ausgebildete und einzuhängende Spritzschutzklappe bzw. Schwallschutzklappe vorgesehen ist.

Des Weiteren ist es gemäß den Merkmalen des Anspruchs 8 und/oder des Anspruchs 9 möglich, in einfacher Weise am Füllstutzensockel ein beispielsweise Kraftstofffilter vorzusehen.

Weitere Einzelheiten der Erfindung sind der folgenden Beschreibung zu entnehmen, in der die Erfindung anhand des in der Zeichnung dargestellten Ausführungsbeispieles näher beschrieben und erläuter ist. Es zeigen:
- Figur 1: in auseinandergezogener perspektivischer Darstellung die Einzelbauteile einer Einrichtung zum dichten Verschließen eines Behälters bestehend aus einem Verschlussdeckel und einem Füllstutzensockel gemäß einem bevorzugten Ausführungsbeispiel vorliegender Erfindung,
- Figur 2: einen Längsschnitt durch den Verschlussdeckel in zusammengebautem Zustand,
- Figur 3: einen Längsschnitt durch den Füllstutzensockel in zusammengebautem Zustand und
- Figur 4: in einem Längsschnitt die zusammengefügte Einrichtung, bei der der Verschlussdeckel auf dem Füllstutzensockel dichtend aufsitzt.

Die in der Zeichnung dargestellte Einrichtung 10 zum dichten Verschließen eines nicht dargestellten Behälters, insbesondere eines solchen für Kraftstoff für beispielsweise Kraftfahrzeuge, wird im folgenden auch als Verschlusseinrichtung 10 bezeichnet. Die Verschlusseinrichtung 10 besteht im Wesentlichen aus einem Verschlussdeckel 12 und einem Füllstutzensockel 14, auf den der Verschlussdeckel 12 flüssigkeitsdicht und gasdicht verschließend aufsetzbar ist. Dabei besitzt sowohl der Verschlussdeckel 12 als auch der Füllstutzensockel 14 ein Dichtteil 25 bzw. 45, welche Dichtteile 25 und 45 ohne Relativverdrehung gegeneinander ausschließlich axial aufeinander zu bewegt werden, wie dies weiter unten noch erläutert werden wird. Der Füllstutzensockel 14 besitzt weiter unten erwähnte Einzelbauteile, mit denen der Verschlussdeckel 12 verbindbar ist, sowie ein separates Bauteil 70 oder 70A, das in nicht dargestellter Weise entweder unmittelbar mit einem Behälter bei dessen Herstellung beispielsweise durch Blasformen aus Kunststoff verbunden wird oder mit einem an einem Behälter angeformten Einfüllstutzenteil beispielsweise durch stumpf ansetzendes Schweißen verbunden wird. Beispielsweise sind Verschlussdeckel 12 und Füllstutzensockel 14 sowie der betreffende Behälter und/oder dessen Füllstutzenteil aus einem Kunststoff geformt. Es versteht sich, dass für die vorgenannten Bauteile auch unterschiedliche Materialien, wie Stahl, Aluminium oder Kunststoff verwendet werden können. Entsprechend wird am Behälter bzw. an dessen Füllstutzenteil das separate Bauteil 70 oder 70A des Füllstutzensockels 14 befestigt, in den dann die übrigen Einzelbauteile des Füllstutzensockels 14 eingesetzt werden.

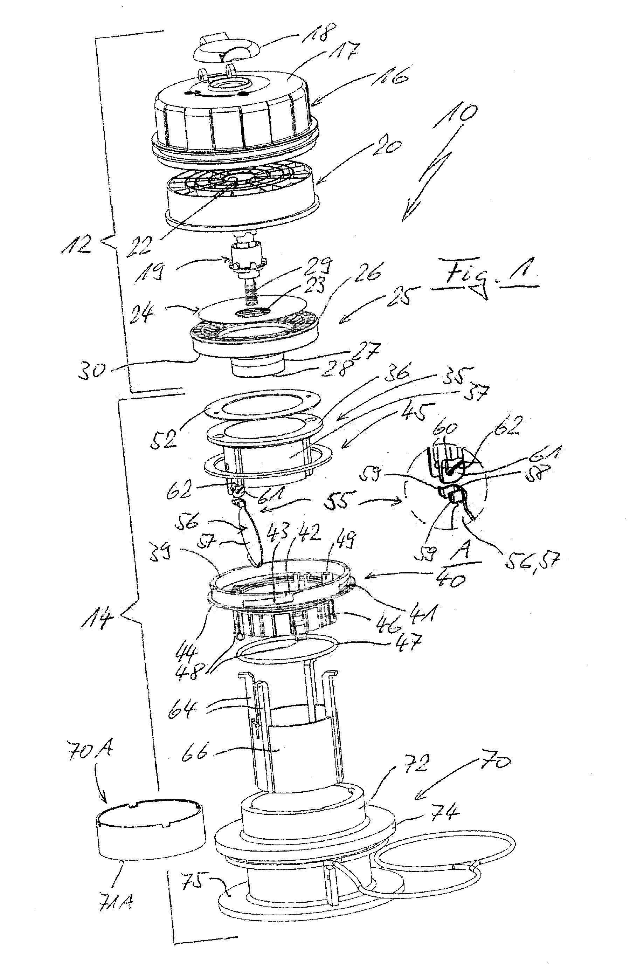

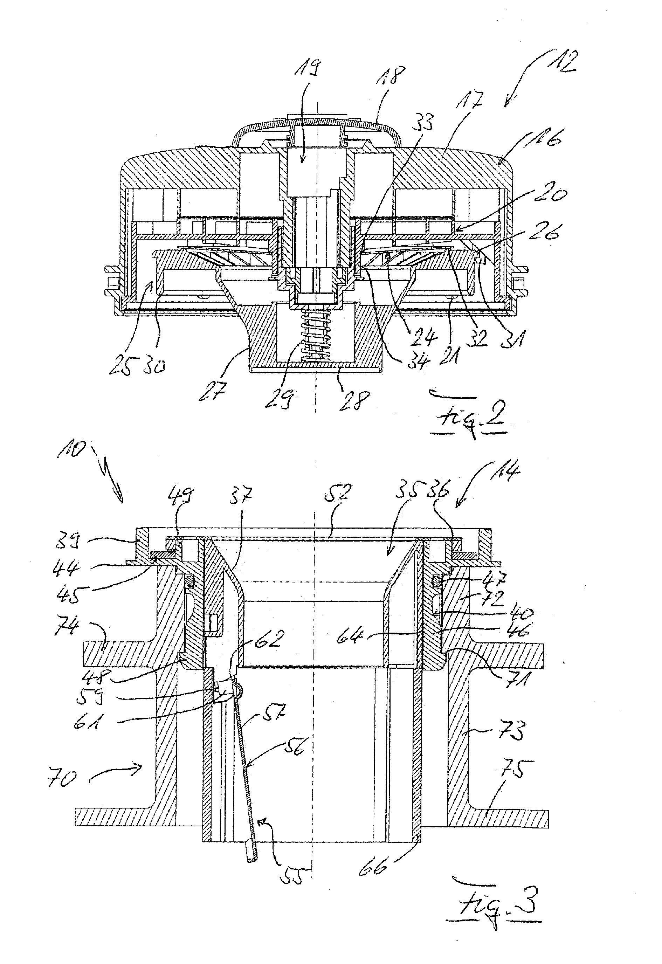

Der Verschlussdeckel 12 besitzt gemäß den Figuren 1 und 2 eine Griffkappe 16, die die Form einer Haube hat und auf deren Decke 17 eine federbelastete Abdeckklappe 18 für den Zylinder eines Verriegelungsschlosses 19 vorgesehen ist. In die Griffkappe 16 ist ein erstes Verschlussteil 20 einsetzbar, das je nach Stellung des Verriegelungsschlosses 19 relativ zur Griffkappe 16 verdrehbar oder unverdrehbar ist. Das erste Verschlussteil 20 besitzt über den Innenumfang verteilt hier vier Verschlusselemente 21 in Form von in radialer Richtung abstehender Nocken, die in noch zu beschreibende Kulissenführungen 41 in einem zweiten Verschlussteil 40 des Füllstutzensockels 14 über eine Dreh-Hub-Bewegung verriegelnd eingreifen können. Damit ist ein Bajonett- oder Renkverschluss zwischen Verschlussdeckel 12 und Füllstutzensockel 14 erreicht. Es versteht sich, dass auch eine andere Verschlussverbindung vorgesehen sein kann. Das haubenförmige Verschlussteil 20, das mit einer axialen Durchgangsöffnung 22 versehen ist, ist innerhalb der Griffkappe 16 axial festgehalten.

Der Verschlussdeckel 12 besitzt ferner das erste Dichtteil 25, das mittels einer umfangsseitigen Rastverbindung im ersten Verschlussteil 20 axial hängend und umfangsseitig verdrehbar gehalten ist. Das Dichtteil 25 besitzt einen Ringflansch 26, mit dem er an Rasthaken 31 im Bodeninneren des ersten Verschlussteil 20 hängend gehalten ist und an den sich radial innen ein durchmesserkleinerer etwa kegelstumpfartig und teilsweise konkav geformter Ansatz 27 axial gerichtet anfügt. In geringem radialem Abstand vom Außenumfang des Ringflansches 26 ist eine sich axial erstreckende ringförmige Dichtkante 30 vorgesehen. Die Dichtkante 30 hat eine erheblich geringere axiale Ausdehnung als der an seinem durchmesserkleineren Bereich verschlossene Ansatz 27. Am Boden 28 des Ansatzes 27 stützt sich eine Druckfeder 29 ab, die sich andernends an einem Ende des Verriegelungsschlosses 19 abstützt, das sich ausgehend vom Dichtteil 25 durch das erste Verschlussteil 20 erstreckt und an der Innenseite der Decke 17 der Griffkappe 16 abstützt. Zwischen dem Dichtteil 25 und dem ersten Verschlussteil 20 ist eine im Ausgangszustand ebene Federscheibe 24 angeordnet, die gemäß Figur 2 mit ihrem mittigen Loch 23 über einen zentralen Führungshals 34 axial gefädelt und innenrandseitig mit ihrer Oberseite an einer Schulter 33 des ersten Verschlussteils 20 axial anliegt. Nahe ihrem Außenumfang liegt die Federscheibe 24 mit ihrer Unterseite ggf. leicht vorgespannt auf einem axial vorstehenden Kreisring 32 des ersten Dichtteils 25 auf, das außenumfangsseitig im ersten Verschlussteil 20 hängend und gegen die Wirkung der Federscheibe 24 relativ zum ersten Verschlussteil 20 axial beweglich gehalten ist.

Der Füllstutzensockel 14 besitzt gemäß den Figuren 1 und 3 als Einzelbauteile einen Fülltrichter 35, der einen Trichterkörper 37 aufweist, der außenumfangsseitig etwa zylindrisch und innenumfangsseitig trichterartig nach Art eines Kegelstumpfes ausgebildet ist. Am innendurchmessergrößten Ende, das dem Verschlussdeckel 12 zugewandt ist, besitzt der Trichterkörper 37 einen Ringflansch 36, der radial über den Außenumfang des Trichterkörpers 37 ragt. Der Trichterkörper 37 ist von dem zweiten Verschlussteil 40 aufgenommen, das an seinem durchmessergrößeren und dem Verschlussdeckel 12 zugewandten axialen Ringansatz 39 außenumfangsseitig mit den erwähnten über den Umfang gleichmäßig verteilt angeordneten hier vier Kulissenführungen 41 versehen ist, von denen jede in bajonettartiger Weise mit einer axialen Zugangsnut 42 und einer umfangsseitigen gewindeartig geneigten Umfangsnut 43 versehen ist. Der axiale Ringansatz 39 befindet sich auf einem Ringboden bzw. Ringflansch 44, an dessen Unterseite sich eine außendurchmesserkleinere Hülse 46 radial innen anschließt, in der in einer Nut nahe dem Ringflansch 44 ein O-Dichtring 47 eingesetzt ist.

Der Füllstutzensockel 14 besitzt als Einzelbauteile außerdem das zweite Dichteil 45, das beim Ausführungsbeispiel die Form einer flachen Ringdichtung aufweist. Die flache Ringdichtung 45 wird auf den Boden 44 innerhalb des Ringansatzes 39 für die Kulissenführung 41 gelegt. Damit ist die Ringdichtung 45 konzentrisch zum Ringansatz 39 und zur Hülse 46 gehalten. In die Hülse 46 des zweiten Verschlussteils 40 kann der Trichterkörper 37 des Fülltrichters 35 axial unverdrehbar eingesetzt werden. Dabei sitzt der Fülltrichter 35 mit seinem Flansch 36 auf zwei diametral gegenüberliegenden axial vom Ringboden 44 einstückig abstehenden und mit einer Gewindebohrung versehenen Auflagestiften 49 auf, auf denen der Flansch 36 mittels Schrauben befestigt werden kann. Damit ist die Ringdichtung 45 innenseitig durch die beiden Auflagestifte 49 zentriert. Ein vorzugsweise metallischer Schutzring 52 wird auf den Flansch 36 des Fülltrichters 35 gebracht und mit dem zweiten Verschlussteil 40 und dem Fülltrichter 35 mittels der Schrauben fest verbunden.

Der Fülltrichter 35 bzw. dessen Trichterkörper 37 dient des Weiteren als Halter für eine Schwallschutzvorrichtung 55, die eine Schwallschutzklappe 56 aufweist, die aus einem Metallblech geformt ist. Die Schwallschutzklappe 56 besitzt ein kreisförmiges plattenförmiges Klappenteil 57, das das durchmesserkleinste Durchströmungsende des Trichterkörpers 37 axial abdeckt und das mittels einer Feder in Schließstellung gehalten ist. Wie sich insbesondere aus dem in Figur 1 separat dargestellten, vergrößerten Ausschnitt A ergibt, ist an einer Außenumfangsseite des Klappenteils 57 der Schwallschutzvorrichtung 55 ein schmaler radialer Ansatz 58 einstückig gebildet, der endseitig zu einem axial gerichteten U geformt ist, von dem Schwenkachsenteile 59 beidseitig rechtwinklig umgebogen sind. Damit sind die Schwenkachsenteile 59 wie das Klappenteil 57 selbst plattenartig rechteckförmig. Die Schwenkachsenteile 59 sind in fluchtenden Bohrungen 60 zweier paralleler Wangen 61 am Trichterkörper 37 gehalten. Die außenumfangsseitig am unteren Ende des Trichterkörpers 37 angeformten Wangen 61 besitzen von einem Außenumfangsbereich ausgehende und radial nach innen und zum Ende des Trichterkörpers 37 hin geneigt verlaufende Schlitze 62, die in die Bohrungen 60 münden und deren lichte Weite gleich oder etwas größer als die Dicke des Blechs des Klappenteils 57 bzw. deren Schwenkachsenteile 59 ist. Die Neigung der Schlitze 62 ist derart, dass die Schwenkachsenteile 59 weder in geschlossenem Zustand des Klappenteils 57 noch in dessen nicht geöffnetem Zustand in Richtung der Schlitze 62 weisen. Mit anderen Worten, zum Ein- bzw. Aushängen der Schwenkachsenteile 59 in bzw. aus den Bohrungen 60 durch die Schlitze 62 muss die Schwenkklappe 56 bzw. dessen Klappenteil 57 nach außerhalb des Trichterkörpers 37 verschwenkt werden.

Zwischen dem Trichterkörper 37 und der Hülse 46 des zweiten Verschlussteils 40 sind in radial miteinander fluchtenden Nuten axiale Haltefinger 64 eines nicht dargestellten Siebes, hier eines Kraftstoffsiebes, geführt, die einenends am Ringboden 44 des zweiten Verschlussteils 40 einhängen und andernends einstückig mit einer Aufnahme 66 für ein nicht dargestelltes Siebteil verbunden sind.

Die vorgenannten Bauteile, nämlich zweites Verschlussteil 40 mit zweitem Dichtteil 45, Sieb bzw. Siebaufnahme sowie Fülltrichter 35 werden bzw. sind in den Verbindungssockel 70 oder 70A eingesetzt, wobei der zweite Verschlussteil 40 mit radial beweglichen Rasthaken 48 hinter einem inneren radialen Rücksprung 71 im Verbindungssockel 70 oder unter die Endstirn 71A des metallischen Verbindungssockels 70A verrastet wird bzw. ist.

Beim einen der dargestellten Ausführungsbeispiele besitzt der Kunststoff-Verbindungssockel 70 einen den Rücksprung 71 aufweisenden Zylinderteil 72, der im Bereich des Rücksprungs 71 sowie an seinem freien Ende 73 außenumfangsseitig einen Ringflansch 74 bzw. 75 einstückig aufweist. Die beiden in axialem Abstand zueinander angeordneten Ringflansche 74 und 75 dienen ggf. dazu, einen Stutzenteil eines nicht dargestellten Behälters aufzunehmen, in dem dieser Bereich des Verbindungssockels 70 beim Kunststoffformen eines Behälters in einer beispielsweise Blasform oder Rotationsmolding-Form für die Herstellung des Behälters aus Kunststoff eingebracht ist. Eine weitere Möglichkeit ist das Verschweißen des Verbindungssockels 70A mit einem Stutzenteil oder die Öffnung eines Behälters. Es versteht sich, dass auch andere Befestigungsmöglichkeiten vorgesehen sein können, insbesondere dann, wenn Verbindungssockel 70 oder 70A und Behälter aus unterschiedlichen Materialien sind.

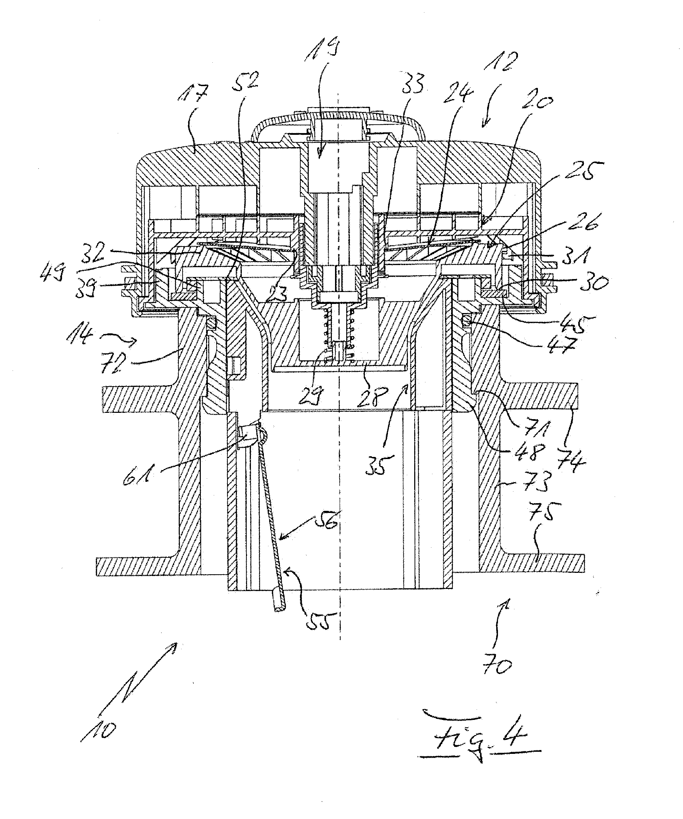

Wie aus Figur 4 ersichtlich ist, ist eine dichte Verbindung zwischen Verschlussdeckel 12 und Füllstutzensockel 14 in renk- oder bajonettartig verbundenem Zustand dadurch gegeben, dass die ringförmige Dichtkante 30 des Verschlussdeckels 12 unter der Wirkung der vorgespannten Federscheibe 24 auf der flachen Ringdichtung 45 im Füllstutzensockel 14 aufliegt. Die Federscheibe 24 ist dadurch vorgespannt, dass der erste Verschlussteil 20 mit der Schulter 33 sich axial zum zweiten Verschlussteil 40 renkartig (also auch axial) bewegt, während die axiale Dichtbewegung des ersten Dichtteils 25 zum zweiten Dichtteil 45 geringer bzw. kürzer ist und dadurch eine relative axiale Bewegung zwischen der Schulter 33 und dem Kreisring 32, d.h. zwischen Innen- und Außenumfang der Federscheibe 24 erfolgt. Bei der Hub-Dreh-Verschlussbewegung des Verschlussdeckels 12 gegenüber dem Füllstutzensockel 14 erfolgt keine relative Drehbewegung von Dichtkante 30 und Ringdichtung 45 sondern nur eine axiale Aufeinanderzubewegung, da die Dichtkante 30 am ersten Dichtteil 25 gegenüber dem ersten Verschlussteil 20 drehbeweglich ist.

## Patentansprüche

1. Einrichtung (10) zum dichten Verschließen eines Behälters, insbesondere eines solchen für Kraftstoff für beispielsweise Kraftfahrzeuge, mit einem Verschlussdeckel (12), der eine Griffkappe (16), ein mit der Griffkappe (16) drehfest verbundenes oder verbindbares Dreh-Hub-Verschlussteil (20), vorzugsweise Bajonett-Verschlussteil, sowie ein erstes Dichtteil (25) aufweist, das gegenüber dem Dreh-Hub-Verschlussteil (20) relativ verdrehbar ist, **gekennzeichnet durch** einen Füllstutzensockel (14), auf den der Verschlussdeckel (12) **durch** eine Drehhubbewegung dicht verschließend aufsetzbar ist und der entweder unmittelbar mit dem Behälter oder mit einem Füllstutzenteil des Behälters verbindbar bzw. verbunden ist, wobei der Füllstutzensockel (14) ein Dreh-Hub-Gegenverschlussteil (40) sowie ein zweites (Gegen-) Dichtteil (45), das mit dem ersten Dichtteil (25) axial gegeneinander gedrückt verbindbar ist, aufweist.

2. Einrichtung nach Anspruch 1, **dadurch gekennzeichnet, dass** der Füllstutzensockel (14) einen Verbindungssockel (70) aufweist, der mit dem Behälter verbunden ist und in den das Dreh-Hub-Gegenverschlussteil (40) einsetzbar ist.

3. Einrichtung nach Anspruch 1 oder 2, **dadurch gekennzeichnet, dass** das erste Dichtteil (25) mit dem Dreh-Hub-Verschlussteil (20) axial federbelastet (Federscheibe 24) bewegbar verbunden ist und eine ringförmig umlaufende und axial vorstehende Dichtkante (30) als erstes Dichtteil (25) aufweist und dass der Füllstutzensockel (14) als zweites (Gegen-)Dichtteil (45) einen vorzugsweise flachen Dichtungsring aufweist.

4. Einrichtung nach mindestens einem der Ansprüche 1 bis 3, **dadurch gekennzeichnet, dass** der Dichtungsring (45) im Füllstutzensockel (14) innerhalb des Dreh-Hub-Gegenverschlussteils (40) und um einen Fülltrichter (35) im Füllstutzensockel (70) konzentrisch gehalten und gegenüber der Stirn des Dreh-Hub-Gegenverschlussteils (40) axial zurückgesetzt und unterhalb eines Flansches (36) des Fülltrichters (35) angeordnet ist.

5. Einrichtung nach mindestens einem der Ansprüche 1 bis 4, **dadurch gekennzeichnet, dass** die umlaufende Dichtkante (30) an einem Dichtgehäuse angeordnet ist, das konzentrisch innerhalb der Dichtkante (30) mit einem in den Fülltrichter (35) passend ragenden kegelstumpfartigen Ansatz (27) versehen ist.

6. Einrichtung nach mindestens einem der vorhergehenden Ansprüche, **dadurch gekennzeichnet, dass** das Dreh-Hub-Verschlussteil (20) mit der Griffkappe (16) axial fest und in Umfangsrichtung mittels eines Verriegelungsschlosses verbunden und als Haube ausgebildet ist, die das Dichtgehäuse des ersten Dichtteils (25) aufnimmt und an deren Wandungsinnenseite Bajonett-Verschlussteile in Form von radialen Nocken (21) vorgesehen sind, die in Kulissenführungen (41) am Dreh-Hub-Gegenverschlussteil (45) des Füllstutzensockels (14) eingreifen.

7. Einrichtung nach mindestens einem der vorhergehenden Ansprüche, **dadurch gekennzeichnet, dass** in den Füllstutzensockel (14) eine Schwallschutzklappen-Vorrichtung (55) eingehängt ist, die einen Halter (37) aufweist, an dem eine Schwallschutzklappe (56) in Schwenkrichtung federnd vorgespannt eingehängt ist und der durch den Fülltrichter (35) gebildet ist und dass die Schwenkachse (59) der Schwallschutzklappe (56) seitlich abstehende einstückig von einem Blech abgebogene, im Schnitt rechteckförmige Nasen aufweist, die in Bohrungen in vom Halter (37) abstehenden Wangen (61) eingreifen, wobei die Bohrungen mittels geneigten Schlitzen (62) von der Innenseite zum Einhängen der Schwallschutzklappe (56) zugängig sind.

8. Einrichtung nach mindestens einem der vorhergehenden Ansprüche, **dadurch gekennzeichnet, dass** in den Füllstutzensockel (14) ein Filter, vorzugsweise für Kraftstoff eingehängt ist.

9. Einrichtung nach Anspruch 8, **dadurch gekennzeichnet, dass** der Filter eine Aufnahme (66) aufweist, die am Halter (37) bzw. am Fülltrichter (35) axial befestigt ist.
